# EUROPÄISCHE PATENTSCHRIFT

(11) **EP 2 510 865 B1**
(45) Veröffentlichungstag und Bekanntmachung des Hinweises auf die Patenterteilung: **31.12.2014**
(21) Anmeldenummer: 12401061.2
(22) Anmeldetag: 11.04.2012
(51) Int. Cl.: A47L 15/42, F16K 7/04, F16K 31/02, F16K 31/22

(54) **Geschirrspülautomat**
Dishwasher
Lave-vaisselle automatique

(30) Priorität: 14.04.2011 DE 102011002051
(43) Veröffentlichungstag der Anmeldung: 17.10.2012
(73) Patentinhaber: Miele & Cie. KG, 33332 Gütersloh (DE)
(72) Erfinder: Buhl, David, 33613 Bielefeld (DE); Marks, Volker, 33611 Bielefeld (DE); Wegener, Dirk, 33649 Bielefeld (DE)

(56) Entgegenhaltungen:
- EP-A1- 1 767 135
- DE-A1- 4 404 369
- DE-A1- 19 710 644
- DE-A1-102008 040 745
- DE-A1-102009 029 186
- FR-A1- 2 758 382
- JP-A- 7 075 618

## Beschreibung

Die Erfindung betrifft einen Geschirrspülautomaten, auch Geschirrspülmaschine genannt, mit einem offenen Strömungskreislauf zur Führung einer Spülflüssigkeit, wobei der Strömungskreislauf Strömungswege bereitstellt, die von einer gemeinsamen Wasserweiche ausgehen und jeweils in einem Sprüharm münden, und mit einem Vorratsbehälter zur Zwischenspeicherung von Spülflüssigkeit, wobei der Vorratsbehälter der Wasserweiche strömungstechnisch nachgeschaltet und unter Zwischenordnung einer Umschaltventileinrichtung an einen der Strömungswege angeschlossen ist.

Geschirrspülautomaten der eingangs genannten Art sind aus dem Stand der Technik an sich gut bekannt, weshalb es eines gesonderten druckschriftlichen Nachweises an dieser Stelle nicht bedarf.

Geschirrspülautomaten der eingangs genannten Art, stellen zur Aufnahme von zu reinigendem Geschirr einen Spülraum zur Verfügung. Dieser verfügt über eine mittels einer Tür wasserdicht verschließbare Beschickungsöffnung.

Innerhalb des Spülraumes sind zumeist mehrere Sprüharme angeordnet, die an einen gemeinsamen, offenen Strömungskreislauf angeschlossen sind, über den die Spülflüssigkeit geführt wird. Je nach Bauart des Geschirrspülautomatens können zwei, drei oder noch mehr Sprüharme vorgesehen sein.

In der Regel werden bei einem Betrieb des Geschirrspülautomaten nicht sämtliche Sprüharme gleichzeitig betrieben. Die zum jeweiligen Sprüharm führenden Strömungswege des Strömungskreislaufs sind deshalb an eine gemeinsame Wasserweiche angeschlossen, wobei je nach Stellung der Wasserweiche die jeweiligen Sprüharme mit Spülflüssigkeit bedient werden.

Aus dem Stand der Technik ist es ferner bekannt, Geschirrspülautomaten mit einem Vorratsbehälter zur Zwischenspeicherung von Spülflüssigkeit auszurüsten. Dabei dient die Zwischenspeicherung von Spülflüssigkeit insbesondere dazu, die gespeicherte Spülflüssigkeit zu einem späteren Zeitpunkt wieder verwenden zu können, was den positiven Effekt mit sich bringt, Spülflüssigkeit einsparen zu können. Der Frischwasserverbrauch lässt sich somit reduzieren. Typischerweise wird dem letzten Spülgang eines Programmablaufes, dem sogenannten Klarspülgang, Spülflüssigkeit entnommen, die dann dem Vorratsbehälter zwecks Zwischenspeicherung zugeführt wird. Mit Beginn eines nächsten Programmablaufes, welcher beispielsweise mit einem Vorspülen beginnen kann, wird dem Vorratsbehälter die zwischengespeicherte Spülflüssigkeit wieder entnommen und dem Spülraum des Geschirrspülautomaten zugeführt.

Gemäß einer ersten möglichen konstruktiven Ausgestaltung kann der Vorratsbehälter strömungstechnisch an die gemeinsame Wasserweiche angeschlossen sein. Gemäß dieser Ausführungsform stellt die Wasserweiche eine weitere Stellposition zur Verfügung, die es gestattet, die Spülflüssigkeit nicht zu einem der Sprüharme, sondern in den Vorratsbehälter zu führen. Eine Rückführung der im Vorratsbehälter zwischengespeicherten Spülflüssigkeit erfolgt in gleicher Weise über diese zusätzliche Stellposition der Wasserweiche.

Gemäß einer alternativen und bevorzugten Ausführungsform ist es aus dem Stand der Technik bekannt, den Vorratsbehälter der Wasserweiche strömungstechnisch nachzuschalten, indem er an einen der Strömungswege angeschlossen ist. Dabei erfolgt der Anschluss des Vorratsbehälters an den Strömungsweg unter Zwischenschaltung einer Umschaltventileinrichtung, die es gestattet, entweder den Vorratsbehälter oder den Strömungsweg mit Spülflüssigkeit zu beschicken.

Insbesondere die vorbeschriebene Ausgestaltung, wonach der Vorratsbehälter der Wasserweiche strömungstechnisch nachgeschaltet und unter Zwischenschaltung einer Umschaltventileinrichtung an einen der Strömungswege angeschlossen ist, hat sich im alltäglichen Praxiseinsatz bewährt. Es soll deshalb hinsichtlich dieser Ausgestaltung eine weitere Verbesserung vorgeschlagen werden, insbesondere eine solche, die eine vereinfachte Bedienung gestattet.

Die DE 10 2009 029 186 A1 offenbart die Merkmale des Oberbegriffs des Anspruchs 1.

Es ist ausgehend vom Vorbeschriebenen die Aufgabe der Erfindung, einen Geschirrspülautomaten der eingangs genannten Art dahingehend weiterzuentwickeln, dass hinsichtlich der Umschaltung zwischen Vorratsbehälter und Sprüharm bzw. zwischen Sprüharm und Vorratsbehälter eine vereinfachte Handhabung erreicht ist.

Diese Aufgabe wird gemäß den Merkmalen des Anspruchs 1 gelöst.

Die Umschaltventileinrichtung nach der Erfindung verfügt über einen Einlassstutzen und zwei Auslassstutzen. Dabei dient der eine Auslassstutzen dem Anschluss der Umschaltventileinrichtung an einen zu einem Sprüharm führenden Strömungsweg. Der andere Anschlussstutzen dient dem strömungstechnischen Anschluss eines Vorratsbehälters zur Zwischenspeicherung von Spülflüssigkeit an die Umschaltventileinrichtung.

Erfindungsgemäß verfügt die Umschaltventileinrichtung über ein Schlauchquetschventil einerseits und ein Kugelventil andererseits. Dabei ist das Schlauchquetschventil der strömungstechnischen Verbindung zwischen Umschaltventileinrichtung und Vorratsbehälter zugeordnet, d. h. das Schlauchquetschventil ist dem Anschlussstutzen der Umschaltventileinrichtung zugeordnet, das der strömungstechnischen Verbindung der Umschaltventileinrichtung und dem Vorratsbehälter dient. Das Kugelventil ist dem anderen Auslassstutzen der Umschaltventileinrichtung zugeordnet, d. h. dem Anschlussstutzen, über welchen die Umschaltventileinrichtung an den Strömungsweg für den Sprüharm angeschlossen ist.

In der Grundstellung der Umschaltventileinrichtung ist der Strömungsweg freigegeben, d. h. das Kugelventil ist geöffnet und das Schlauchquetschventil ist geschlossen. Gemäß dieser Grundstellung wird ausgehend von der Wasserweiche der Strömungsweg und damit der daran angeschlossene Sprüharm mit Spülflüssigkeit versorgt.

Erfolgt eine Umschaltung der Umschaltventileinrichtung, so wird der zum Sprüharm führende Strömungsweg geschlossen, d. h. das in den Strömungsweg eingeschaltete Kugelventil wird geschlossen und gleichzeitig wird das dem Vorratsbehälter zugeordnete Schlauchquetschventil geöffnet. In dieser Stellung der Umschaltventileinrichtung gelangt die Spülflüssigkeit ausgehend von der Wasserweiche nicht mehr über den Strömungsweg zum jeweils angeschlossenen Sprüharm, sondern wird vielmehr unter Passierung des geöffneten Schlauchquetschventils in den Vorratsbehälter zwecks Zwischenspeicherung geleitet. In dieser Stellung der Umschaltventileinrichtung ist in umgekehrter Strömungsrichtung auch eine Entleerung des Vorratsbehälters möglich, d. h. in dem Vorratsbehälter insbesondere zum Zwecke der Wiederverwendung zwischengespeicherte Spülflüssigkeit kann dem Vorratsbehälter entnommen werden, wobei in diesem Fall auch das Kugelventil zur Freigabe des Strömungsweges geöffnet ist. Bei abgeschalteter Umwälzpumpe kann dann die Spülflüssigkeit aus dem Vorratsbehälter der Schwerkraft folgend austreten und dem Spülraum des Geschirrspülautomaten über den an die Umschaltventileinrichtung angeschlossenen Strömungsweg zugeführt werden.

Beide Ventile der Umschaltventileinrichtung, d. h. das Schlauchquetschventil einerseits und das Kugelventil andererseits werden gemäß einem weiteren Merkmal der Erfindung mittels eines gemeinsamen Aktuators betätigt. Dabei ist der Aktuator vorzugsweise als thermisch aktivierbares Dehnstoff-Aktor-Element ausgebildet und verfügt über eine Schiebermechanik. Der Aktuator dient in vorteilhafter Weise der gleichzeitigen Bedienung des Kugelventils einerseits und des Schlauchquetschventils andererseits. Diese Ausgestaltung hat den besonderen Vorteil, dass über nur einen Aktuator sowohl eine Bedienung des Schlauchquetschventils als auch eine Bedienung des Kugelventils erfolgen kann. Dies macht die erfindungsgemäße Ausgestaltung besonders einfach sowohl im Aufbau als auch in der Handhabung.

Insgesamt hat sich die erfindungsgemäße Ausgestaltung als praxisgerecht, zuverlässig in der Handhabung und sicher im Betrieb erwiesen. Zunächst einmal ist von Vorteil, dass der Einsatz einer Umschaltventileinrichtung nach der Erfindung eine Modifikation der Wasserweiche nicht erforderlich macht. Bei der Wasserweiche kann es sich vielmehr um eine aus dem Stand der Technik bekannte Wasserweiche handeln, die auch in herkömmlicher Weise betrieben werden kann. Insofern bedarf es keines Eingriffes in die Geschirrspülautomatenkonstruktion.

Die erfindungsgemäße Umschaltventileinrichtung ermöglicht eine Ansteuerung über einen Aktuator, d. h. einen Aktuator, der sowohl der Bedienung des Schlauchquetschventils als auch der Bedienung des Kugelventils dient. Dies vereinfacht die Handhabung und erhöht die Betriebssicherheit.

Die Verwendung eines Kugelventils bietet zudem weitere Vorteile. Bei einem Kugelventil kommt als loses Verschlusselement eine Kugel zum Einsatz. Dabei hat die Verwendung einer Kugel als Verschlusselement den Vorteil, dass auch vergleichsweise große Strömungsquerschnitte (beispielsweise 20 mm bis 25 mm) dicht und sicher verschlossen werden können. Die Funktionstüchtigkeit und Betriebssicherheit der erfindungsgemäßen Ausgestaltung ist auch insofern gewährleistet. Darüber hinaus hat eine Kugel als Verschlusselement den Vorteil, dass sie vergleichsweise unempfindlich gegenüber Verschmutzung ist, wodurch die dauerhafte Betriebssicherheit und Langlebigkeit der gesamten Konstruktion erhöht ist.

Darüber hinaus hat die erfindungsgemäße Kombination von Schlauchquetschventil und Kugelventil den Vorteil, dass in der geöffneten Ventilstellung, d. h. der Grundstellung der Umschaltventileinrichtung ein besonders verlustarmer Betrieb möglich ist. Der Strömungswiderstand ist in dieser Stellung der Umschaltventileinrichtung, d. h. bei geöffnetem Kugelventil und bei geschlossenem Schlauchventil, sehr gering.

Das Schlauchquetschventil erbringt im Übrigen den Vorteil, dass es sehr gut geeignet ist, kleinere Strömungsquerschnitte (z. B. 6 mm bis 10 mm) besonders sicher, insbesondere auch langanhaltend dicht verschließen zu können. Diese Eigenschaft des Schlauchquetschventils ist insbesondere mit Blick auf den der Zwischenspeicherung von Spülflüssigkeit dienenden Vorratsbehälter von Vorteil, da eine Zwischenspeicherung von zum Teil mehreren Tagen gewünscht sein kann. Ein dichter Verschluss des Vorratsbehälters ist über das Schlauchquetschventil über die gesamte Speicherdauer zuverlässig möglich.

Ein weiterer Vorteil der erfindungsgemäßen Ventilkombination ist im Übrigen darin zu sehen, dass die Verwendung eines gemeinsamen Aktuators zur Bedienung sowohl des Schlauchquetschventils als auch zur Bedienung des Kugelventils vorgesehen sein kann, wodurch die gesamte Baugruppe der Umschaltventileinrichtung sehr kostengünstig herzustellen ist.

Weitere Merkmale und Vorteile der Erfindung ergeben sich aus der nachfolgenden Beschreibung anhand der Figuren. Dabei zeigen:
- Fig. 1:: in schematischer Darstellung einen in erfindungsgemäßer Weise ausgerüsteten Geschirrspülautomaten;
- Fig. 2:: in einer schematischen Detailansicht gemäß Ausschnitt II mach Fig. 1 eine Umschaltventileinrichtung nach der Erfindung in einer ersten Stellung und
- Fig. 3:: in einer schematischen Detailansicht gemäß Ausschnitt II nach Fig. 1 eine Umschaltventileinrichtung nach der Erfindung in einer zweiten Stellung.

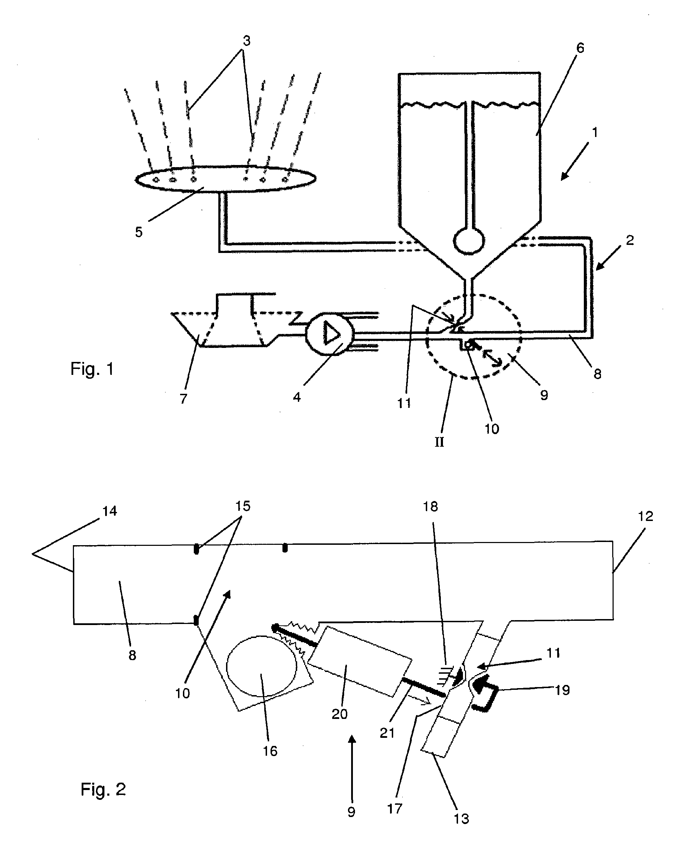

Fig. 1 lässt in einer rein schematischen Darstellung einen Geschirrspülautomaten 1 nach der Erfindung erkennen. Dieser Geschirrspülautomat 1 stellt in an sich bekannter Weise einen offenen Strömungskreislauf 2 zur Führung einer Spülflüssigkeit 3 zur Verfügung, wobei der Strömungskreislauf 2 Strömungswege 8 bereitstellt, die von einer gemeinsamen Wasserweiche 4 ausgehen und jeweils in einem Sprüharm 5 münden. Im dargestellten Ausführungsbeispiel ist der besseren Übersicht wegen nur ein Sprüharm 5 mit dem zugehörigen Strömungsweg 8 dargestellt.

In an sich bekannter Weise verfügt der Geschirrspülautomat 1 über einen in den Figuren nicht näher dargestellten Spülraum. Innerhalb des Spülraumes ist eine Sammelstelle 7 für Spülflüssigkeit ausgebildet. An diese Sammelstelle 7 ist der Strömungsweg 8 für den Sprüharm 5 angeschlossen, und zwar unter Zwischenschaltung einer Wasserweiche 4, die über eine integrierte und in den Zeichnungen nicht näher dargestellte Umwälzpumpe verfügt.

Im bestimmungsgemäßen Verwendungsfall sammelt sich in der Sammelstelle 7 des Geschirrspülautomatens 1 Spülflüssigkeit 3. Diese wird mittels der in der Wasserweiche 4 integrierten Umwälzpumpe angesogen und bei entsprechender Stellung der Wasserweiche 4 über den Strömungsweg 8 beispielsweise dem mittleren Sprüharm 5 zugeführt, über welchen die Sprühflüssigkeit 3 innerhalb des Spülraums des Geschirrspülautomatens 1 verteilt wird.

Der Geschirrspülautomat 1 verfügt des Weiteren über einen Vorratsbehälter 6. Dieser Vorratsbehälter 6 dient in an sich bekannter Weise der Zwischenspeicherung von Spülflüssigkeit 3, insbesondere zum Zwecke der Wiederverwendung in zeitlich nachfolgenden Spül-und/oder Programmschritten.

Der Vorratsbehälter 6 ist der Wasserweiche 4 strömungstechnisch nachgeschaltet und unter Zwischenschaltung einer Umschaltventileinrichtung 9 an den Strömungsweg 8 angeschlossen, wie dies insbesondere die Darstellung nach Fig. 1 erkennen lässt. Dabei verfügt die Umschaltventileinrichtung 9 über ein Schlauchquetschventil 11 einerseits und ein Kugelventil 10 andererseits. Die Umschaltventileinrichtung 9 kombiniert demnach ein Schlauchquetschventil 11 mit einem Kugelventil 10.

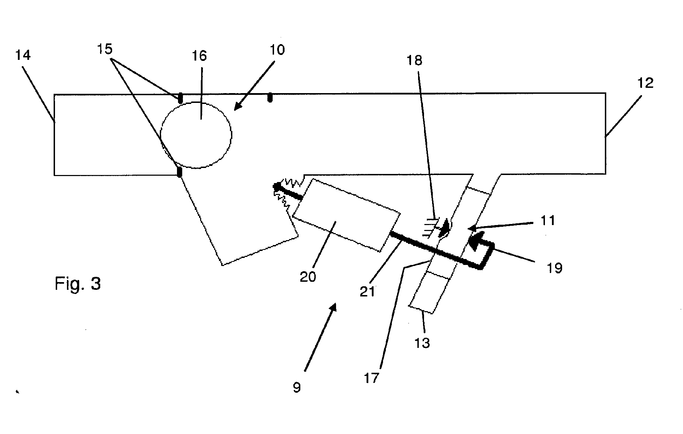

Eine vergrößerte Detailansicht der erfindungsgemäß ausgestalteten Umschaltventileinrichtung 9 ist den Figuren 2 und 3 zu entnehmen, wobei Fig. 2 die Umschaltventileinrichtung 9 in ihrer geöffneten Grundstellung zeigt, der gemäß das Kugelventil 10 geöffnet und das Schlauchquetschventil 11 geschlossen ist. Fig. 3 zeigt die sogenannte Vorratsbehälterbefüllungs-Stellung der Umschaltventileinrichtung 9, bei der das Kugelventil 10 geschlossen und das Schlauchquetschventil 11 geöffnet ist.

Wie die Figuren 2 und 3 erkennen lassen, stellt die Umschaltventileinrichtung 9 einen Einlassstutzen 12 sowie einen ersten Auslassstutzen 13 und einen zweiten Auslassstutzen 14 bereit. Der Einlassstutzen 12 ist wasserweichenseitig vorgesehen, d. h. ausgehend von der Wasserweiche 4 gelangt die von der Pumpe der Wasserweiche 4 geförderte Spülflüssigkeit 3 über den Einlassstutzen 12 in die Umschaltventileinrichtung 9. Je nach Stellung der Ventile, d. h. des Schlauchquetschventils 11 und des Kugelventils 10 kann die über den Einlassstutzen 12 in die Umschaltventileinrichtung 9 eingeleitete Spülflüssigkeit 3 entweder zum ersten Auslassstutzen 13 oder zum zweiten Auslassstutzen 14 gelangen. Dabei ist der erste Auslassstutzen 13 dem Vorratsbehälter 6 zugeordnet, d. h. die Spülflüssigkeit 3 kann über den ersten Auslassstutzen 13 in Richtung des Vorratsbehälters 6 fließen. Der andere Auslassstutzen, d. h. der zweite Ausslassstutzen 14 ist dem Strömungsweg 8 bzw. dem daran angeschlossenen Sprüharm 5 zugeordnet, d. h. in die Umschaltventileinrichtung 9 eingeleitete Spülflüssigkeit 3 verlässt die Umschaltventileinrichtung 9 über den zweiten Anschlussstutzen 14 in Richtung des an den Strömungsweg 8 angeschlossenen Sprüharm 5.

Der erste Auslassstutzen 13 ist abschnittsweise als Schlauch 17 ausgebildet. Auf diesen Schlauch 17 wirkt das Schlauchquetschventil 11 ein. Es verfügt in an sich bekannter Weise über ein Festlager 18 einerseits und ein Gegenlager 19 andererseits. Dabei ist das Gegenlager 19 über eine Schiebermechanik 21 relativ gegenüber dem Festlager 18 verschiebbar, was eine Quetschung des Schlauchs 17 ermöglicht. Fig. 2 lässt das Schlauchquetschventil 11 in geschlossener Stellung, d. h. mit gequetschtem Schlauch 17 erkennen. Fig. 3 zeigt hingegen die geöffnete Stellung des Schlauchquetschventils 11, in welcher der Schlauch 17 geöffnet ist, was ein Hindurchströmen von Spülflüssigkeit 3 gestattet.

Das Kugelventil 10 verfügt über eine Kugel 16 als Verschlusselement. In der Grundstellung wird die Kugel 16 in ihrer Ruhelage gehalten, wie dies Fig. 2 erkennen lässt. In geschlossener Stellung des Kugelventils 10 ist die Kugel 16 aus ihrer Ruhelage in ihre Verschlusslage überführt, wobei sie in ihrer Verschlusslage, wie sie in Fig. 3 gezeigt ist, an Dichtungslippen 15 anliegt, was einen dichtenden Abschluss des dem Kugelventil 10 zugeordneten zweiten Anschlussstutzens 14 bewirkt.

Das Kugelventil 10 und das Schlauchquetschventil 11 werden über einen gemeinsamen Aktuator 20 bedient.

Die Funktionsweise der erfindungsgemäß ausgestalteten Umschaltventileinrichtung 9 ist die Folgende:
In der Grundstellung der Umschaltventileinrichtung 9, wie sie in Fig. 2 gezeigt ist, ist der Zulauf zum Vorratsbehälter 6 geschlossen, d. h. das Schlauchquetschventil 11 ist geschlossen, womit der Schlauch 17 dicht abgequetscht ist. Der Zufluss zum Strömungsweg 8 für den Sprüharm 5 ist indes geöffnet, d. h. die Kugel 16 des Kugelventils 10 befindet sich in ihrer Ruhelage.

Mit einer Betätigung des Aktuators 20 durch Bestromung desselben wird die Schiebermechanik 21 translatorisch in Bewegung gesetzt. Die Schiebermechanik 21 gibt dabei zum einen die bisher in ihrer Lage fixierte Kugel 16 frei, wobei die Kugel 16 durch die vorherrschenden Strömungsverhältnisse aufschwimmt. Gleichzeitig öffnet die Schiebermechanik 21 den in der Grundstellung vollständig dicht gequetschten Schlauch 17 zur Versorgung des Vorratsbehälters 6. Sofern während der Bestromung des Aktuators 20 die Umwälzpumpe der Wasserweiche 4 eingeschaltet ist, wird die Kugel 16 aus ihrer Ruhelage angesaugt, mitgerissen und an die Dichtungslippen 16 angelegt, wodurch der Wasserweg zum mittleren Sprüharm 5 verschlossen wird. Infolge dieser Ventilumstellung wird die Spülflüssigkeit 3 vollständig in den Vorratsbehälter 6 umgeleitet, was zu einer Befüllung desselben führt. Bis auf Leckvolumenströme findet eine Beschickung des Sprüharms 5 mit Spülflüssigkeit bei dieser Ventilstellung nicht statt. Sobald der Befüllungsvorgang abgeschlossen ist, was beispielsweise zeitgesteuert erfolgen kann, wird die Bestromung des Aktuators 20 beendet. Infolgedessen schließt das Schlauchquetschventil 11, was zu einem Verschluss des Schlauches 17 führt. Während der Verschlusszeit des Schlauchquetschventils 11 wird die Umwälzpumpe der Wasserweiche 4 weiter betrieben, da ansonsten die Kugel 16 aus ihrem dichtenden Sitz herausfallen würde, was zu einer Entleerung des Vorratsbehälters 6 führen würde. Sobald eine vollständige Rückstellung der Schiebermechanik 21 abgeschlossen ist, kann die Umwälzpumpe der Wasserweiche 4 ausgeschaltet werden, was eine Rückführung der Kugel 16 in ihre Grundstellung nach Fig. 2 gestattet, und zwar aufgrund der auf die Kugel 16 einwirkenden Gewichtskraft.

Zum Zwecke der Entleerung des Vorratsbehälters 6 ist der Aktuator 20 bei abgeschalteter Umwälzpumpe zu bestromen. Dies führt zu einer Öffnung des Schlauchquetschventils 11, wobei die Kugel 16 des Kugelventils 10 aufgrund der abgeschalteten Umwälzpumpe nicht in ihre dichtende Stellung gemäß Fig. 3 durch von der Umwälzpumpe 4 geförderte Spülflüssigkeit 3 mitgerissen wird. Das Kugelventil 10 bleibt also geöffnet, so dass die im Vorratsbehälter 6 zwischengespeicherte Spülflüssigkeit 3 den Vorratsbehälter 6 der Schwerkraft folgend verlassen und über den Strömungsweg 8 in die beispielsweise als Sammeltopf ausgebildete Sammelstelle 7 gelangen kann.

## Patentansprüche

1. Geschirrspülautomat mit einem offenen Strömungskreislauf (2) zur Führung einer Spülflüssigkeit (3), wobei der Strömungskreislauf (2) Strömungswege (8) bereitstellt, die von einer gemeinsamen Wasserweiche (4) ausgehen und jeweils in einem Sprüharm (5) münden, und mit einem Vorratsbehälter (6) zur Zwischenspeicherung von Spülflüssigkeit (3), wobei der Vorratsbehälter (6) der Wasserweiche (4) strömungstechnisch nachgeschaltet und unter Zwischenordnung einer Umschaltventileinrichtung (9) an einen der Strömungswege (8) angeschlossen ist,
**dadurch gekennzeichnet,**
**dass** die Umschaltventileinrichtung (9) einen Einlassstutzen (12) und zwei Auslassstutzen (13, 14) sowie ein Schlauchquetschventil (11) und ein Kugelventil (10) aufweist, wobei das Schlauchquetschventil (11) dem einen Auslassstutzen (13), welcher der strömungstechnischen Verbindung der Umschaltventileinrichtung (9) und dem Vorratsbehälter (6) dient, und das Kugelventil (10) dem anderen Auslassstutzen (14) zugeordnet ist, wobei das Schlauchquetschventil (11) und das Kugelventil (10) mittels eines gemeinsamen Aktuators (20) betätigbar ausgebildet sind.

2. Geschirrspülautomat nach Anspruch 1,
**dadurch gekennzeichnet,**
**dass** der Aktuator eine Schiebermechanik (21) aufweist.

3. Geschirrspülautomat nach Anspruch 2,
**dadurch gekennzeichnet,**
**dass** der Aktuator ein thermisch aktivierbares Dehnstoff-Aktor-Element ist.

4. Geschirrspülautomat nach einem der vorhergehenden Ansprüche,
**dadurch gekennzeichnet,**
**dass** der Vorratsbehälter (6) dem Schlauchquetschventil (11) strömungstechnisch nachgeschaltet ist.

5. Geschirrspülautomat nach einem der vorhergehenden Ansprüche,
**dadurch gekennzeichnet,**
**dass** in der Grundstellung der Umschaltventileinrichtung (9) der Strömungsweg (8) freigegeben und das Kugelventil (10) geöffnet und das Schlauchquetschventil (11) geschlossen ist.

## Claims

1. Automatic dishwasher comprising an open flow circuit (2) for guiding a rinsing fluid (3), the flow circuit (2) providing flow paths (8) which begin at a common water deflector (4) and discharge in each case in a spray arm (5), and comprising a storage container (6) for temporarily storing rinsing fluid (3), the storage container (6) being downstream of the water deflector (4) in terms of flow and being connected to one of the flow paths (8) by means of the interposition of a changeover valve arrangement (9),
**characterised in that**
the changeover valve arrangement (9) comprises an inlet connecting piece (12) and two outlet connecting pieces (13, 14), a pinch valve (11) and a ball valve (10), the pinch valve (11) being associated with one outlet connecting piece (13) which provides the fluid communication between the changeover valve arrangement (9) and the storage container (6), and the ball valve (10) being associated with the other outlet connecting piece (14), the pinch valve (11) and the ball valve (10) being configured so as to be actuatable by means of a common actuator (20).

2. Automatic dishwasher according to claim 1,
**characterised in that**
the actuator comprises a slide mechanism (21).

3. Automatic dishwasher according to claim 2,
**characterised in that**
the actuator is a thermally activatable expansion actuator element.

4. Automatic dishwasher according to any of the preceding claims,
**characterised in that**
the storage container (6) is downstream of the pinch valve (11) in terms of flow.

5. Automatic dishwasher according to any of the preceding claims,
**characterised in that**,
in the normal position of the changeover valve (9), the flow paths (8) are released and the ball valve (10) is open and the pinch valve is closed (11).

## Revendications

1. Lave-vaisselle, avec un circuit d'écoulement (2) ouvert pour le guidage d'un liquide de lavage (3), le circuit d'écoulement (2) fournissant des chemins d'écoulement (8) qui partent d'un distributeur d'eau (4) commun et débouchent chacun dans un bras de pulvérisation (5), et avec un réservoir (6) pour le stockage intermédiaire de liquide de lavage (3), le réservoir (6) étant monté en aval du distributeur d'eau (4) au plan de la technique d'écoulement et étant raccordé à un des chemins d'écoulement (8) avec intercalation d'un dispositif de soupape de commutation (9),
**caractérisé en ce que**
le dispositif de soupape de commutation (9) présente une tubulure d'admission (12) et deux tubulures d'évacuation (13, 14) ainsi qu'une valve péristaltique (11) et une soupape à bille (10), la valve péristaltique (11) étant affectée à la tubulure d'évacuation (13) qui sert au raccordement, au plan de la technique d'écoulement, du dispositif de soupape de commutation (9) et au réservoir (6), et la soupape à bille (10) étant affectée à l'autre tubulure d'évacuation (14), la valve péristaltique (11) et la soupape à bille (10) étant constituées de façon actionnable au moyen d'un actionneur (20) commun.

2. Lave-vaisselle selon la revendication 1,
**caractérisé en ce que**
l'actionneur présente un mécanisme de registre (21).

3. Lave-vaisselle selon la revendication 2,
**caractérisé en ce que**
l'actionneur est un élément d'actionnement en matériau expansible pouvant être actionné thermiquement.

4. Lave-vaisselle selon l'une des revendications précédentes,
**caractérisé en ce que**
le réservoir (6) est, au plan de la technique d'écoulement, monté en aval de la valve péristaltique (11).

5. Lave-vaisselle selon l'une des revendications précédentes,
**caractérisé en ce que**,
dans la position de base du dispositif de soupape de commutation (9), le chemin d'écoulement (8) est débloqué et la soupape à bille (10) est ouverte, et la valve péristaltique (11) est fermée.
